# FASCICULE DE BREVET EUROPEEN

(11) **EP 4 010 235 B1**
(45) Date de publication et mention de la délivrance du brevet: **27.09.2023**
(21) Numéro de dépôt: 20758270.1
(22) Date de dépôt: 03.08.2020
(51) Int. Cl.: B62D 35/02, B62D 65/02, B62D 65/16

(54) **DÉFLECTEUR À PATTES DE COUPLAGE, POUR UN SOUBASSEMENT DE VÉHICULE**
ABLENKER MIT KUPPLUNGSZUNGEN FÜR EIN FAHRZEUGUNTERGESTELL
DEFLECTOR HAVING COUPLING TABS, FOR A VEHICLE UNDERFRAME

(30) Priorité: 07.08.2019 FR 1909039
(43) Date de publication de la demande: 15.06.2022
(73) Titulaire: PSA Automobiles SA, 78300 Poissy (FR)
(72) Inventeur: NOIZET, Jessica, 78960 VOISINS LE BRETONNEUX (FR); BERTH, Stephane, 92320 CHATILLON (FR)
(86) Numéro de dépôt international: PCT/FR2020/051428
(87) Numéro de publication internationale: WO 2021/023943

(56) Documents cités:
- EP-A1- 2 623 401
- WO-A1-2013/180597
- DE-A1- 4 024 035
- JP-A- 2000 190 873
- US-A1- 2011 095 563

## Description

### Domaine technique de l'invention

La présente invention revendique la priorité de la demande française 1909039 déposée le 07 Aout 2019.

L'invention concerne les véhicules à roues comprenant une structure comportant un soubassement, et plus précisément certains déflecteurs devant être solidarisés à ces soubassements.

### Etat de la technique

Certains véhicules à roues, généralement de type automobile, comprennent une structure (ou caisse) comportant un soubassement s'étendant suivant des directions longitudinale et transversale et comportant des première et seconde parties auxquelles doivent être solidarisés fixement et respectivement, l'un derrière l'autre, des premier et second déflecteurs. Ces premier et second déflecteurs sont chargés de réduire la traînée aérodynamique et donc la consommation d'énergie, et par conséquent sont fréquemment dits « aérauliques ». Par exemple, les documents EP2623401 et JP2000190873 décrivent un véhicule comportant un premier déflecteur s'étendant sous le véhicule dans les directions longitudinale et transversale, solidarisé à un deuxième déflecteur. Le document EP 2 623 401 A par exemple divulgue un déflecteur selon le préambule de la revendication 1.

Par exemple, la première partie est une partie arrière du soubassement et donc le premier déflecteur est un déflecteur arrière, et la seconde partie est une partie avant du soubassement et donc le second déflecteur est un déflecteur avant.

Fréquemment, le second déflecteur doit être solidarisé fixement non seulement à la seconde partie du soubassement, mais aussi à un équipement de support qui est solidarisé fixement à une extrémité transversale de cette seconde partie.

Actuellement, un technicien commence par solidariser fixement par vissage le premier déflecteur à la première partie du soubassement, alors-même que la structure du véhicule est suspendue au-dessus du sol sur la chaîne de montage, puis ce technicien doit procéder à la solidarisation fixe par vissage du second déflecteur à la seconde partie du soubassement.

Afin de procéder à cette dernière solidarisation fixe le technicien doit tout d'abord saisir un second déflecteur, une visseuse et des vis, puis doit faire passer ce second déflecteur au-dessus de sa tête avec ses bras afin de le placer précisément à l'endroit où il doit être vissé, puis il doit procéder au vissage avec la visseuse. Cette phase d'assemblage du second déflecteur au soubassement est donc particulièrement difficile à réaliser compte tenu non seulement de l'encombrement et du poids du second déflecteur, mais également du fait qu'elle doit être réalisée au-dessus de la tête du technicien. On notera que cette phase d'assemblage non seulement est très peu ergonomique et fatigante, mais aussi nécessite souvent que le technicien s'y reprenne au moins à deux fois ce qui fait perdre du temps sur la chaîne de montage.

Par ailleurs, cette phase d'assemblage est impossible à mettre en oeuvre par un unique technicien lorsque le second déflecteur s'étend quasiment sur toute la largeur (transversale) du soubassement, car le poids et l'encombrement sont alors beaucoup trop importants.

L'invention a donc notamment pour but d'améliorer la situation.

### Présentation de l'invention

Elle propose notamment à cet effet un déflecteur, d'une part, destiné à équiper un véhicule à roues comprenant un soubassement s'étendant suivant des directions longitudinale et transversale et comportant une première partie à laquelle est solidarisé un autre déflecteur et une seconde partie comprenant une extrémité transversale à laquelle est solidarisé un équipement de support, et, d'autre part, comprenant une partie principale et un premier bord transversal destinés à être solidarisés fixement et respectivement à la seconde partie du soubassement et à l'équipement de support.

Ce déflecteur se caractérise par le fait :
- que son premier bord transversal comprend au moins une première patte de couplage munie d'une tête propre à être introduite dans un premier trou de l'équipement de support pour s'ancrer temporairement sur ce dernier afin de suspendre le déflecteur à l'équipement de support, et
- qu'il comprend un second bord transversal, opposé au premier bord transversal, et comprenant au moins une seconde patte de couplage munie d'une extrémité libre propre à être introduite dans un second trou de l'autre déflecteur et comportant une butée transversale anti-recul propre à buter sur un pourtour du second trou pour coupler le déflecteur à l'autre déflecteur.

Grâce à l'invention, une fois que le technicien a couplé le déflecteur à l'équipement de support et à l'autre déflecteur, il peut lâcher complètement le déflecteur afin de saisir sa visseuse et les vis pour procéder au vissage destiné à assurer sa solidarisation fixe au moins à la seconde partie du soubassement.

Le déflecteur selon l'invention peut comporter d'autres caractéristiques qui peuvent être prises séparément ou en combinaison, et notamment :
- son premier bord transversal peut comprendre deux premières pattes de couplage dont les têtes sont propres à être introduites respectivement dans deux premiers trous de l'équipement de support ;
- son second bord transversal peut comprendre deux secondes pattes de couplage dont les extrémités libres sont propres à être introduites respectivement dans deux seconds trous de l'autre déflecteur ;
- chaque première patte de couplage peut comprendre une partie principale incurvée et comportant une extrémité à laquelle est solidarisée fixement la tête, cette dernière comprenant une paroi comportant une sous-partie plane destinée à s'appuyer sur une surface supérieure d'une paroi de l'équipement de support pendant la suspension du déflecteur ;
- chaque tête peut être solidarisée fixement à un côté longitudinal de l'extrémité de la partie principale associée afin que sa sous-partie plane s'appuie sur la surface supérieure de la paroi de l'équipement de support après un décalage transversal du déflecteur ;
- chaque tête peut être propre à être placée au-dessus et à distance de la surface supérieure de la paroi de l'équipement de support après le couplage du déflecteur à l'autre déflecteur et la solidarisation fixe du déflecteur à la seconde partie du soubassement et à l'équipement de support ;
- chaque seconde patte de couplage peut être déformable ;
- chaque première patte de couplage peut faire partie intégrante du déflecteur ;
- chaque seconde patte de couplage peut faire partie intégrante du déflecteur ;
- il peut être réalisé dans un matériau rigide qui est choisi parmi une matière plastique et un métal.

L'invention propose également un véhicule à roues, éventuellement de type automobile, et comprenant, d'une part, un soubassement s'étendant suivant des directions longitudinale et transversale et comportant une première partie à laquelle est solidarisé un autre déflecteur et une seconde partie comprenant une extrémité transversale à laquelle est solidarisé un équipement de support, et, d'autre part, au moins un déflecteur du type de celui présenté ci-avant et solidarisé fixement à cette seconde partie et à l'équipement de support.

Par exemple, l'équipement de support peut être un berceau de train avant.

Egalement par exemple, ce véhicule peut comprendre un groupe motopropulseur (ou GMP) tout électrique.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective du côté de la face inférieure, un exemple de soubassement d'une structure de véhicule automobile, après solidarisation fixe à sa face inférieure d'un premier déflecteur et d'un second déflecteur selon l'invention,
[Fig. 2] illustre schématiquement, dans une vue en perspective de dessous, l'exemple de réalisation de second déflecteur de la figure 1, avant sa solidarisation fixe au soubassement,
[Fig. 3] illustre schématiquement, dans une vue en perspective, un exemple de réalisation d'une première patte de couplage du second déflecteur de la figure 2,
[Fig. 4] illustre schématiquement, dans une vue en perspective du côté de la face inférieure, le soubassement de la figure 1 équipé de son premier déflecteur et avec le second déflecteur suspendu temporairement par ses premières pattes de couplage à l'équipement de support,
[Fig. 5] illustre schématiquement, dans une vue en perspective du côté de la face supérieure de l'équipement de support, le couplage temporaire de l'une des premières pattes de couplage du second déflecteur à cet équipement de support,
[Fig. 6] illustre schématiquement, dans une vue en perspective du côté des faces inférieures des premier et second déflecteurs, le couplage temporaire au premier déflecteur d'un exemple de réalisation de l'une des secondes pattes de couplage du second déflecteur,
[Fig. 7] illustre schématiquement, dans une vue en perspective du côté de la face supérieure du premier déflecteur, le couplage temporaire au premier déflecteur de la seconde patte de couplage de la figure 6, et
[Fig. 8] illustre schématiquement, dans une vue en perspective du côté de la face supérieure de l'équipement de support, les positions respectives des premières pattes de couplage du second déflecteur par rapport à l'équipement de support une fois que le second déflecteur a été solidarisé fixement à la seconde partie du soubassement et à l'équipement de support.

### Description détaillée de l'invention

L'invention a notamment pour but de proposer un (second) déflecteur D2 destiné à équiper un soubassement SS d'une structure d'un véhicule à roues auquel a déjà été solidarisé fixement un premier déflecteur D1, et facilitant son montage.

Dans ce qui suit, on considère, à titre d'exemple non limitatif, que les premier D1 et second D2 déflecteurs (aérauliques) sont destinés à équiper un véhicule de type automobile, comme par exemple une voiture. Mais l'invention n'est pas limitée à ce type de véhicule à roues. Elle concerne en effet tout véhicule à roues comprenant une structure (ou caisse) comportant un soubassement devant être équipé de premier et second déflecteurs. Ainsi, elle concerne aussi les véhicules utilitaires, les minibus, les cars, les camions, et les engins de voirie, notamment. Par ailleurs, on considère dans ce qui suit, à titre d'exemple non limitatif, que le véhicule comprend un groupe motopropulseur (ou GMP) tout électrique et donc comprenant au moins une batterie rechargeable destinée à lui fournir de l'énergie électrique (notamment pour provoquer des déplacements). Mais le GMP pourrait être hybride (par exemple thermique et électrique) ou purement thermique, par exemple.

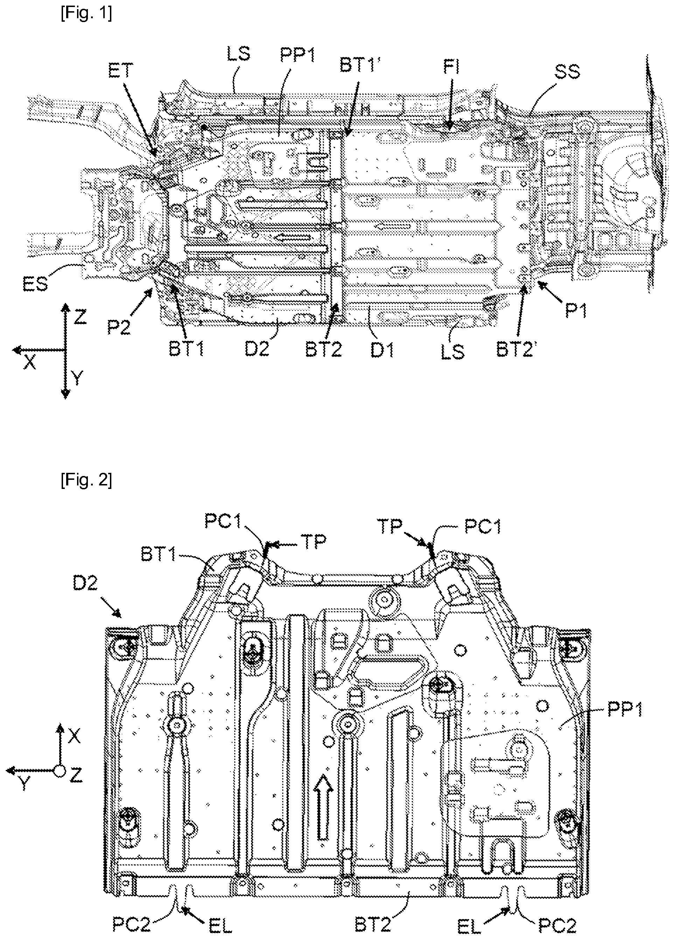

Sur les figures 1 à 8 la direction X est la direction longitudinale du véhicule, laquelle est sensiblement parallèle aux côtés longitudinaux (ou latéraux) comportant les portières latérales, la direction Y est la direction transversale du véhicule, laquelle est perpendiculaire à la direction X, et la direction Z est une direction dite verticale, laquelle est perpendiculaire aux directions longitudinale X et transversale Y.

On a schématiquement représenté sur la figure 1 un exemple de soubassement SS d'une structure (ou caisse) d'un véhicule (ici de type automobile), après que des premier D1 et second D2 déflecteurs (aérauliques) aient été solidarisés fixement à sa face inférieure FI, respectivement dans des première P1 et seconde P2 parties.

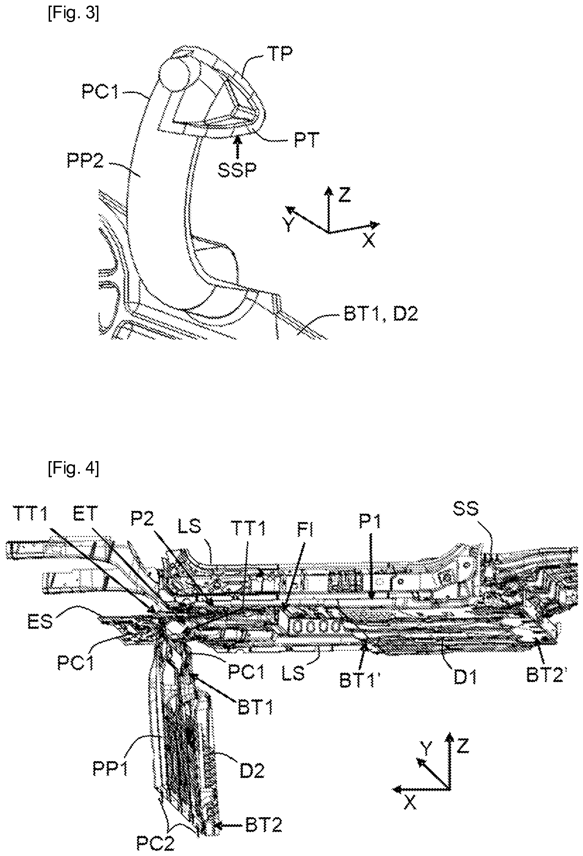

Comme illustré sur les figures 1 et 4, le soubassement SS s'étend suivant les directions longitudinale X et transversale Y et comprend une face inférieure FI destinée à être orientée vers la surface de roulage sur laquelle circule le véhicule et bordée par deux longerons LS droit et gauche qui s'étendent suivant la direction longitudinale X.

Ce soubassement SS comprend des première P1 et seconde P2 parties auxquelles sont, au final, solidarisées fixement et respectivement le premier déflecteur D1 et le second déflecteur D2 selon l'invention. De plus, la seconde partie P2 du soubassement comprend une extrémité transversale ET à laquelle est solidarisé un équipement de support ES (auquel est aussi au final solidarisé fixement le second déflecteur D2.

Dans l'exemple illustré non limitativement sur les figures 1 et 4, la première partie P1 est la partie arrière du soubassement SS et donc le premier déflecteur D1 est un déflecteur arrière, et la seconde partie P2 est une partie avant du soubassement SS et donc le second déflecteur D2 est un déflecteur avant. Mais l'agencement inverse est aussi possible.

Dans le cas de l'exemple illustré où le véhicule est de type automobile, l'équipement de support ES peut, par exemple, être un berceau de train avant. Mais il peut s'agir de toute autre pièce du soubassement du véhicule se trouvant devant le déflecteur (comme par exemple un brancard ou un longeron).

Le premier déflecteur D1 est celui qui est le premier solidarisé fixement par vissage à la première partie P1 par un technicien, alors-même que la structure du véhicule est suspendue au-dessus du sol sur une chaîne de montage. Ce premier déflecteur D1 comprend des premier BT1' et second BT2' bords transversaux opposés entre eux.

La solidarisation fixe par vissage du second déflecteur D2 à la seconde partie P2 du soubassement SS est réalisée ensuite facilement par ce technicien grâce à l'invention, comme cela est expliqué ci-dessous.

Comme cela est notamment illustré sur les figures 1, 2 et 4, le second déflecteur D2 comprend une partie principale PP1 bordée par des premier BT1 et second BT2 bords transversaux opposés entre eux. La partie principale PP1 est destinée à être solidarisée fixement à la seconde partie P2 du soubassement SS. Le premier bord transversal BT1 est destiné à être solidarisé fixement au moins à l'équipement de support ES. Le second bord transversal BT2 est destiné à être solidarisé fixement à l'interface entre les première P1 et seconde P2 parties du soubassement SS en étant placé contre (et sous) le premier bord transversal BT1' du premier déflecteur D1.

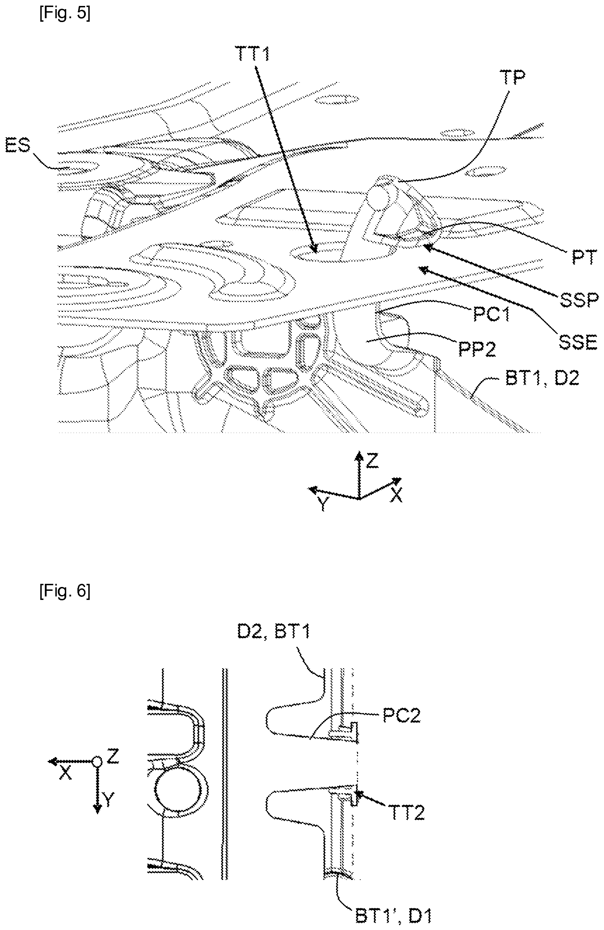

Comme cela est notamment illustré sur les figures 2, 4 et 8, le premier bord transversal BT1 du second déflecteur D2 comprend au moins une première patte de couplage PC1 qui est munie d'une tête TP propre à être introduite dans un premier trou TT1 d'une paroi de l'équipement de support ES pour s'ancrer temporairement sur ce dernier (ES) afin de suspendre le déflecteur D2 à l'équipement de support ES. Le résultat de cette introduction et de cet ancrage (permettant un couplage temporaire, par suspension, du second déflecteur D2 à l'équipement de support ES) est illustré sur les figures 4 et 5.

Pour obtenir ce résultat, le technicien saisit le second déflecteur D2 en plaçant le plus vers le haut son premier bord transversal BT1 (avec chaque première patte de couplage PC1). Puis, le technicien introduit la tête TP de chaque première patte de couplage PC1 dans le premier trou TT1 correspondant, jusqu'à ce que chaque tête TP repose sur la surface supérieure SSE de la paroi de l'équipement de support ES dans laquelle est défini chaque premier trou TT1.

On notera que dans l'exemple illustré non limitativement sur les figures 2 et 4, le premier bord transversal BT1 du second déflecteur D2 comprend deux premières pattes de couplage PC1 dont les têtes TP sont propres à être introduites respectivement dans deux premiers trous TT1 de l'équipement de support ES. Mais le nombre de premières pattes de couplage PC1 peut prendre n'importe quelle valeur supérieure ou égale à un. Avec une seule première patte de couplage PC1 la suspension du second déflecteur D2 à l'équipement de support ES est relativement instable (ce qui n'est pas grave car cette suspension dure très peu de temps). En revanche, à partir de deux premières pattes de couplage PC1 la suspension du second déflecteur D2 à l'équipement de support ES est stable.

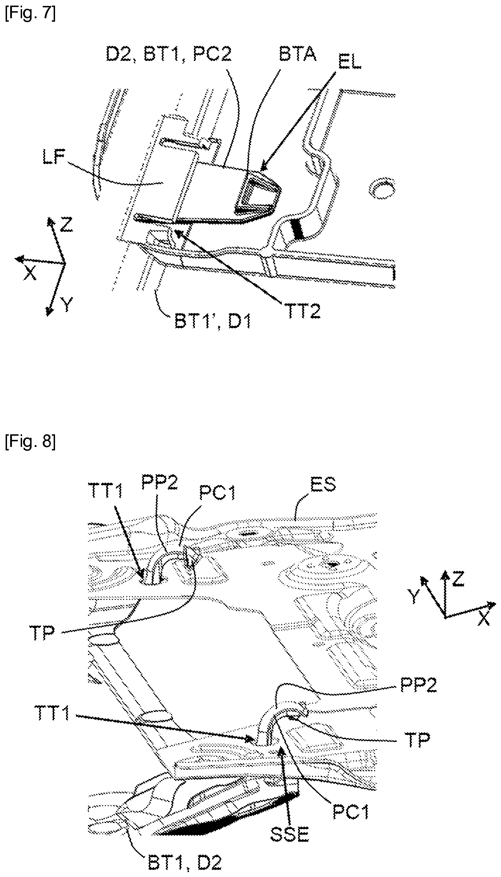

Comme cela est notamment illustré sur les figures 2 et 4, le second bord transversal BT2 du second déflecteur D2 comprend au moins une seconde patte de couplage PC2 qui est munie d'une extrémité libre EL propre à être introduite dans un second trou TT2 du premier (ou autre) déflecteur D1. Comme cela est illustré sur la figure 7, chaque extrémité libre EL comprend une butée transversale anti-recul BTA propre à buter sur un pourtour du second trou TT2 correspondant pour coupler le second déflecteur D2 au premier déflecteur D1. Le résultat de cette introduction avec blocage anti-retour est illustré sur les figures 6 et 7.

Pour obtenir ce résultat, le technicien saisit par son second bord transversal BT2 le second déflecteur D2 suspendu (figure 4), afin d'entraîner en rotation vers le haut ce second bord transversal BT2. Puis, il introduit l'extrémité libre EL de chaque seconde patte de couplage PC2 dans le second trou TT2 correspondant, jusqu'à ce que la butée transversale anti-recul BTA soit parvenue au-dessus de la face supérieure du premier bord transversal BT1' du premier déflecteur D1 et ainsi empêche le recul de son extrémité libre EL. Le technicien peut alors lâcher complètement le second déflecteur D2, qui est désormais couplé, en position sensiblement horizontale (plan XY), à l'équipement de support ES et au premier déflecteur D1, afin de saisir sa visseuse et les vis. Il peut alors procéder au vissage destiné à assurer la solidarisation fixe du second déflecteur D2 à la seconde partie P2 du soubassement SS, mais aussi au premier bord transversal BT1' du premier déflecteur D1 au niveau de l'interface entre les première P1 et seconde P2 parties du soubassement SS, ainsi qu'éventuellement à l'équipement de support ES.

L'invention est déjà particulièrement utile pour le technicien lorsque le second déflecteur D2 s'étend sur une partie de la largeur (transversale) du soubassement SS. Mais elle est encore plus utile pour le technicien lorsque le second déflecteur D2 s'étend quasiment sur toute la largeur (transversale) du soubassement SS, comme illustré non limitativement sur les figures 1 et 4, car le poids et l'encombrement du second déflecteur D2 sont alors beaucoup plus importants. Cet exemple de réalisation illustré est particulièrement bien adapté, bien que non limitativement, au cas où l'on doit solidariser fixement, entre la face inférieure FI du soubassement SS et au moins le second déflecteur D2, au moins une batterie rechargeable alimentant le GMP du véhicule.

On notera que dans l'exemple illustré non limitativement sur les figures 2 et 4, le second bord transversal BT2 du second déflecteur D2 comprend deux secondes pattes de couplage PC2 dont les extrémités libres EL sont propres à être introduites respectivement dans deux seconds trous TT2 du premier déflecteur D1. Mais le nombre de secondes pattes de couplage PC2 peut prendre n'importe quelle valeur supérieure ou égale à un.

On notera également, comme illustré non limitativement sur les figures 3, 4, 5 et 8, que chaque première patte de couplage PC1 peut comprendre une partie principale PP2 incurvée et comportant une extrémité à laquelle est solidarisée fixement la tête TP. Dans ce cas, la tête TP peut comprendre une paroi PT qui comporte une sous-partie plane SSP destinée à s'appuyer sur la surface supérieure SSE de la paroi de l'équipement de support ES pendant la suspension du second déflecteur D2. Cela permet d'augmenter la stabilité de la suspension.

En présence de cette dernière option, chaque tête TP peut, par exemple, être solidarisée fixement à un côté longitudinal de l'extrémité de la partie principale PP2 associée afin que sa sous-partie plane SSP s'appuie sur la surface supérieure SSE de la paroi de l'équipement de support ES après que le technicien ait décalé transversalement le second déflecteur D2 par rapport à la seconde partie P2 du soubassement SS. On entend ici par « côté longitudinal » un côté qui est « parallèle » à la direction longitudinale X. On comprendra en effet que sans ce décalage transversal chaque tête TP demeurerait située au-dessus du premier trou TT1 correspondant, et donc ne pourrait pas assurer l'ancrage destiné à provoquer la suspension du second déflecteur D2.

Mais dans une variante de réalisation, chaque tête TP pourrait être solidarisée fixement à un côté transversal de l'extrémité de la partie principale PP2 associée, ce qui nécessiterait que le technicien décale longitudinalement le second déflecteur D2 par rapport à la seconde partie P2 du soubassement SS. On entend ici par « côté transversal » un côté qui est « parallèle » à la direction transversale Y. On comprendra en effet que sans ce décalage longitudinal chaque tête TP demeurerait située au-dessus du premier trou TT1 correspondant, et donc ne pourrait pas assurer l'ancrage destiné à provoquer la suspension du second déflecteur D2.

Egalement en présence de la dernière option, et comme illustré non limitativement sur la figure 8, chaque tête TP peut être propre à être placée au-dessus et à distance de la surface supérieure SSE de la paroi de l'équipement de support ES après le couplage du second déflecteur D2 au premier déflecteur D1 et la solidarisation fixe du second déflecteur D2 à la seconde partie P2 du soubassement SS et à l'équipement de support ES. En effet, la forme incurvée de la partie principale PP2 de chaque première patte de couplage PC1 induit, lors du vissage, un léger écartement des têtes TP des premières pattes de couplage PC1 de la surface supérieure SSE de la paroi de l'équipement de support ES, ce qui n'a pas d'importance puisqu'elles (TP) n'ont plus besoin d'assurer un ancrage de couplage.

On notera également que chaque seconde patte de couplage PC2 est de préférence déformable. Cela permet en effet de faciliter le passage de son extrémité libre EL (avec sa butée transversale anti-recul BTA) au travers du second trou TT2 correspondant. Ce passage peut être encore plus facilité lorsqu'une partie du pourtour de chaque second trou TT2 est défini par une languette flexible LF, comme illustré non limitativement sur la figure 7. On comprendra qu'ainsi lors de l'introduction de l'extrémité libre EL dans le second trou TT2 correspondant sa butée transversale anti-recul BTA pousse vers le haut la languette flexible LF qui revient ensuite dans sa position initiale dans laquelle elle empêche tout recul de la butée transversale anti-recul BTA. Cette languette flexible LF résulte, par exemple, de la définition de deux encoches longitudinales dans une portion du premier bord transversal BT1' du premier déflecteur D1 qui délimite partiellement un second trou TT2.

On notera également que chaque première patte de couplage PC1 peut soit faire partie intégrante du second déflecteur D2 (et plus précisément de son premier bord transversal BT1), comme illustré non limitativement sur les figures 3, 4, 5 et 8, soit être une pièce qui est rapportée sur le premier bord transversal BT1 du second déflecteur D2. Cela peut notamment dépendre du matériau dans lequel est réalisé le second déflecteur D2 (et plus précisément sa partie principale PP1 avec les premier BT1 et second BT2 bords transversaux). En effet, s'il est réalisé dans un matériau rigide de type matière plastique, il est préférable qu'il (D2) soit monobloc (comme illustré), car dans le cas contraire on serait obligé de rapporter chaque première patte de couplage PC1 sur son premier bord transversal BT1 par collage ou vissage, ce qui est à priori moins résistant. En revanche, s'il est réalisé dans un matériau rigide de type métal, il (D2) peut être soit monobloc (comme illustré), soit réalisé par assemblage de pièces soudées ou vissées entre elles. La matière plastique utilisée peut, par exemple, être du polypropylène (ou PP) ou bien du polyéthylène (ou PE). Le métal utilisé peut, par exemple, être un aluminium ou un acier.

On notera également que chaque seconde patte de couplage PC2 peut soit faire partie intégrante du second déflecteur D2 (et plus précisément de son second bord transversal BT2), comme illustré non limitativement sur les figures 2, 4, 6 et 7, soit être une pièce qui est rapportée sur le second bord transversal BT2 du second déflecteur D2. Cela peut notamment dépendre du matériau dans lequel est réalisé le second déflecteur D2 (et plus précisément sa partie principale PP1 avec les premier BT1 et second BT2 bords transversaux).

## Revendications

1. Déflecteur (D2) pour un véhicule à roues comprenant un soubassement (SS) s'étendant suivant des directions longitudinale et transversale et comportant une première partie (P1) à laquelle est solidarisé un autre déflecteur (D1) et une seconde partie (P2) comprenant une extrémité transversale (ET) à laquelle est solidarisé un équipement de support (ES), ledit déflecteur (D2) comprenant une partie principale (PP1) et un premier bord transversal (BT1) destinés à être solidarisés fixement et respectivement à ladite seconde partie (P2) et audit équipement de support (ES), **caractérisé en ce que** ledit premier bord transversal (BT1) comprend au moins une première patte de couplage (PC1) munie d'une tête (TP) propre à être introduite dans un premier trou (TT1) dudit équipement de support (ES) pour s'ancrer temporairement sur ce dernier (ES) afin de suspendre ledit déflecteur (D2) audit équipement de support (ES), et **en ce qu'**il comprend un second bord transversal (BT2), opposé audit premier bord transversal (BT1), et comprenant au moins une seconde patte de couplage (PC2) munie d'une extrémité libre (EL) propre à être introduite dans un second trou (TT2) dudit autre déflecteur (D1) et comportant une butée transversale anti-recul (BTA) propre à buter sur un pourtour dudit second trou (TT2) pour coupler ledit déflecteur (D2) audit autre déflecteur (D1).

2. Déflecteur selon la revendication 1, **caractérisé en ce que** ledit premier bord transversal (BT1) comprend deux premières pattes de couplage (PC1) dont les têtes (TP) sont propres à être introduites respectivement dans deux premiers trous (TT1) dudit équipement de support (ES).

3. Déflecteur selon la revendication 1 ou 2, **caractérisé en ce que** ledit second bord transversal (BT2) comprend deux secondes pattes de couplage (PC2) dont les extrémités libres (EL) sont propres à être introduites respectivement dans deux seconds trous (TT2) dudit autre déflecteur (D1).

4. Déflecteur selon l'une des revendications 1 à 3, **caractérisé en ce que** chaque première patte de couplage (PC1) comprend une partie principale (PP2) incurvée et comportant une extrémité à laquelle est solidarisée fixement ladite tête (TP), cette dernière (TP) comprenant une paroi (PT) comportant une sous-partie plane (SSP) destinée à s'appuyer sur une surface supérieure (SSE) d'une paroi dudit équipement de support (ES) pendant la suspension dudit déflecteur (D2).

5. Déflecteur selon la revendication 4, **caractérisé en ce que** chaque tête (TP) est solidarisée fixement à un côté longitudinal de l'extrémité de la partie principale (PP2) associée afin que sa sous-partie plane (SSP) s'appuie sur ladite surface supérieure (SSE) de la paroi dudit équipement de support (ES) après un décalage transversal dudit déflecteur (D2).

6. Déflecteur selon la revendication 4 ou 5, **caractérisé en ce que** chaque tête (TP) est propre à être placée au-dessus et à distance de ladite surface supérieure (SSE) de la paroi dudit équipement de support (ES) après le couplage dudit déflecteur (D2) audit autre déflecteur (D1) et la solidarisation fixe dudit déflecteur (D2) à ladite seconde partie (P2) et audit équipement de support (ES).

7. Déflecteur selon l'une des revendications 1 à 6, **caractérisé en ce que** chaque seconde patte de couplage (PC2) est déformable.

8. Véhicule à roues comprenant un soubassement (SS) s'étendant suivant des directions longitudinale et transversale et comportant une première partie (P1) à laquelle est solidarisé un déflecteur (D1) et une seconde partie (P2) comprenant une extrémité transversale (ET) à laquelle est solidarisé un équipement de support (ES), **caractérisé en ce qu'**il comprend en outre un autre déflecteur (D2) selon l'une des revendications précédentes, solidarisé fixement à ladite seconde partie (P2) et audit équipement de support (ES).

9. Véhicule selon la revendication 8, **caractérisé en ce que** ledit équipement de support (ES) est un berceau de train avant.

10. Véhicule selon la revendication 8 ou 9, **caractérisé en ce qu'**il comprend un groupe motopropulseur tout électrique.

## Patentansprüche

1. Ablenker (D2) für ein Radfahrzeug mit einem in Längs- und Querrichtung verlaufenden Unterbau (SS) mit einem ersten Teil (P1), mit dem ein weiterer Ablenker (D1) verbunden ist, und einem zweiten Teil (P2) mit einem querverlaufenden Ende (ET), mit dem eine Stützeinrichtung (ES) verbunden ist, wobei der Ablenker (Teil) einen Teil aufweist Hauptkante (PP1) und erste Querkante (BT1) zur festen Verbindung mit dem zweiten Teil (P2) bzw. der Stützeinrichtung (ES), **dadurch gekennzeichnet, dass** die erste Querkante (BT1) mindestens eine erste Kupplungslasche (PC1) umfasst, die mit einem Kopf (TP) versehen ist, der in ein erstes Loch (TT1) der Richtung eingeführt werden kann Stützeinrichtung (ES) zum vorübergehenden Verankern auf der Stützeinrichtung (ES) zum Aufhängen der Ablenkeinrichtung (D2) an der Stützeinrichtung (ES), und dadurch, dass sie eine zweite Querkante (BT2) aufweist, die der ersten Querkante (BT1) gegenüberliegt, und mindestens eine zweite Kupplungslasche (PC2) mit einem freien Ende (EL) aufweist zur Einführung in ein zweites Loch (TT2) des weiteren Ablenkblechs (D1) und mit einem Antirückstoßqueranschlag (BTA), der an einem Umfang des zweiten Lochs (TT2) anschlagen kann, um den Ablenkblech (D2) mit dem weiteren Ablenkblech (D1) zu verbinden.

2. Wie sieht die Lage aus? Deflektor nach Anspruch 1, **dadurch gekennzeichnet, dass** die erste Querkante (BT1) zwei erste Kupplungslaschen (PC1) aufweist, deren Köpfe (TP) geeignet sind, in jeweils zwei erste Löcher (TT1) der Stützeinrichtung (ES) eingeführt zu werden.

3. Die Kommission wird Folgendes vorschlagen: Deflektor nach Anspruch 1 oder 2, **dadurch gekennzeichnet, dass** die zweite Querkante (BT2) zwei zweite Kupplungslaschen (PC2) aufweist, deren freie Enden (EL) geeignet sind, in jeweils zwei zweite Löcher (TT2) der anderen Deflektorplatte (D1) eingeführt zu werden.

4. Die Kommission wird Folgendes vorschlagen: Deflektor nach einem der Ansprüche 1 bis 3, **dadurch gekennzeichnet, dass** jede erste Kupplungslasche (PC1) einen gekrümmten Hauptabschnitt (PP2) mit einem Ende aufweist, an dem der Kopf (TP) fest befestigt ist, wobei der Kopf (TP) eine Wand (PT) aufweist, die einen ebenen Unterabschnitt (SSP) zum Abstützen auf eine obere Oberfläche (SSESS) aufweist einer Wand der Stützeinrichtung (ES) während der Aufhängung der Ablenkeinrichtung (D2).

5. Die Kommission wird Folgendes vorschlagen: Deflektor nach Anspruch 4, **dadurch gekennzeichnet, dass** jeder Kopf (TP) fest an einer Längsseite des Endes des zugeordneten Hauptteils (PP2) befestigt ist, sodass sich sein ebener Unterteil (SSP) nach einer Querverschiebung des Deflektors (D2) auf der oberen Wandfläche (SSESS) der Stützeinrichtung (ES) abstützt.

6. Die Kommission wird daher um Beantwortung folgender Fragen ersucht: Deflektor nach Anspruch 4 oder 5, **dadurch gekennzeichnet, dass** jeder Kopf (TP) so beschaffen ist, dass er über und von der oberen Wandfläche (SSESS) der Stützeinrichtung (ES) nach dem Koppeln des Deflektors (D2) mit der anderen Deflektoreinrichtung (D1) und dem festen Verbinden des Deflektors (D2) mit dem zweiten Stützeinrichtung angeordnet ist (ES).

7. Die Kommission wird die Kommission um Beantwortung folgender Fragen ersuchen: Deflektor nach einem der Ansprüche 1 bis 6, **dadurch gekennzeichnet, dass** jede zweite Kupplungslasche (PC2) verformbar ist.

8. Die Kommission wird Folgendes vorschlagen: Radfahrzeug mit einem in Längs- und Querrichtung verlaufenden Unterbau (SS) mit einem ersten Teil (P1), mit dem ein Ablenkblech (D1) fest verbunden ist, und einem zweiten Teil (P2) mit einem querverlaufenden Ende (ET), mit dem ein Stützgerät (ES) fest verbunden ist, **dadurch gekennzeichnet, dass** es ferner ein weiteres Ablenkblech (D2) gemäß Verfahren nach einem der vorhergehenden Ansprüche, das fest mit dem zweiten Teil (P2) und der Trägereinrichtung (ES) verbunden ist.

9. Die Kommission wird daher um folgende Auskünfte ersucht: Fahrzeug nach Anspruch 8, **dadurch gekennzeichnet, dass** die Stützeinrichtung (ES) eine vordere Zugwiege ist.

10. Fahrzeug nach Anspruch 8 oder 9, **dadurch gekennzeichnet, dass** es eine elektrische Antriebseinheit umfasst.

## Claims

1. Deflector (D2) for a wheeled vehicle comprising a base (SS) extending in longitudinal and transverse directions and having a first part (P1) to which is joined another deflector (D1) and a second part (P2) comprising a transverse end (ET) to which is connected supporting equipment (ES), the said deflector (D2) comprising a main part (PP1) and a first edge Transversal (BT1) intended to be securely linked together to the second part (P2) and to the support equipment (ES), **characterized in that** the first transversal edge (BT1) includes at least one first coupling leg (PC1) with a head (TP) suitable to be inserted into a first hole (TT1) of the said support equipment (ES) to anchor temporarily on the latter (ES) in order to suspend the said deflector (D2) for the support equipment (ES), and in so far as it includes a second transverse edge (BT2), opposite the first transverse edge (BT1), and comprising at least one second coupling leg (PC2) with a free end (EL) suitable for insertion into a second hole (TT2) of the said other deflector (D1) and having an anti-setback transverse stop (BL) TA) suitable to run on a circumference of the second hole (TT2) to connect the said deflector (D2) to the other deflector (D1).

2. Deflector according to Claim 1, **characterized by** the fact that the said first transverse edge (BT1) consists of two first coupling legs (PC1) whose heads (TP) are suitable for insertion in two first holes (TT1) of the said support equipment (ES), respectively.

3. Deflector according to Claim 1 or 2, **characterized in that** the said second transverse edge (BT2) consists of two second coupling legs (PC2) whose free ends (EL) are suitable to be inserted into two second holes (TT2) of the other deflector (D1), respectively.

4. Deflector according to one of the claims 1 to 3, characterized that each first coupling leg (PC1) includes a curved main part (PP2) with an end to which the said head (TP) is connected, the latter (TP) comprising a wall (PT) with a flat subpart (SSP) intended to rely on a top surface (SSE) of a wall of the said support equipment (ES) during suspension of the said deflector (D2).

5. Deflector according to Claim 4, characterized that each head (TP) is bound together to a longitudinal side of the end of the associated main part (PP2) so that its flat subpart (SSP) is based on the said upper surface (SSE) of the wall of the said support equipment (ES) after a transverse offset of the said deflector (D2).

6. Deflector according to claim 4 or 5, characterized that each head (TP) is suitable to be placed above and at a distance from the said upper surface (SSE) of the wall of the said support equipment (ES) after coupling the said deflector (D2) to the other deflector (D1) and the fixed solidarity of the said deflector (D2) to the said second part (P2) and support equipment (ES).

7. Deflector according to one of the claims 1 to 6, characterized as each second coupling leg (PC2) is deformable.

8. Wheeled vehicle comprising a base (SS) extending in longitudinal and transverse directions and having a first part (P1) to which a deflector (D1) is connected and a second part (P2) to which a transverse end (ET) is connected with support equipment (ES), **characterized in** addition by another deflector (D2) according to one of the preceding claims, solidated fixing to the second part (P2) and the support equipment (ES).

9. Vehicle according to claim 8, characterized as the said support equipment (ES) is a cradle of the front train.

10. Vehicle according to claim 8 or 9, characterized as it includes an all-electric powertrain.
